Europäisches Patentamt

European Patent Office

Office européen des brevets

(11) Publication number: **0 026 663**
**A2**

(12) # EUROPEAN PATENT APPLICATION

(21) Application number: **80303426.3**

(22) Date of filing: **29.09.80**

(51) Int. Cl.³: **G 01 T 1/26**
**H 05 G 1/44**

(30) Priority: **01.10.79 US 80667**

(43) Date of publication of application:
**08.04.81 Bulletin 81/14**

(84) Designated Contracting States:
**AT BE CH DE FR GB IT LI LU NL SE**

(71) Applicant: **GENERAL X-RAY CORPORATION**
**30 Commerce Road**
**Stamford Connecticut 06904(US)**

(72) Inventor: **Codina, Jorge G.**
**223 Secor Road**
**Hartsdale, Westchester New York(US)**

(72) Inventor: **O'Neil, Edward**
**206 Beacon Hill Road**
**Fairfield Connecticut(US)**

(74) Representative: **Wilson, Joseph Martin et al,**
**WITHERS & ROGERS 4 Dyer's Buildings Holborn**
**London EC1N 2JT(GB)**

(54) **Automatic exposure controlled radiography.**

(57) An X-ray detector comprises an insulating rectangular detector plate having printed thereon a pair of interpositioned copper conductor combs. The combs are interleaved to form a pattern of parallel closely spaced conductor fingers. Impinging radiation creates surface conduction, allowing current to flow between the two combs. Electronic circuitry monitors the current flow between the combs. The integral of this current flow is sensed by a threshold detector which is preset to turn the radiation source off when a particular current integral level is reached. The detector plate is designed to be an integral part of the film cassette holder during the exposure of radiographs.

EP 0 026 663 A2

0026663

# AUTOMATIC EXPOSURE CONTROLLED RADIOGRAPHY

## TECHNICAL FIELD

This invention relates to radiation detectors, and more particularly, to radiation detectors for use with automatic exposure controlled radiography.

## BACKGROUND ART

The use of X-rays in the medical profession has been commonplace for many years, although the danger that is caused by unrestricted use of X-rays has only become apparent fairly recently. It is important to find means for controlling the amount of radiation that is absorbed by a patient, while still insuring that consistently high quality radiographs are achieved.

One method of controlling radiation is to limit the exposure time of the X-ray source. Although this effectively limits the radiation dosage per patient, differences in patient physiologies, such as in tissue densities, can result in inconsistent quality among radiographs.

In order to maintain good quality radiographs, it is necessary to control the amount of radiation that impinges on the X-ray film. This can be done with an X-ray detector adapted as an automatic exposure control. The X-ray detector measures the impinging radiation and shuts off the X-ray source when a preset amount of radiation is measured.

Two common types of X-ray detectors are the photoelectric and the ionization chamber detector. Both of these types of detectors have low sensitivity and cannot be used for automatic exposure with fast film speeds, because the radiation dosage that is required by the photoelectric and ionization chamber detectors is much greater than that needed by the faster X-ray films. The integration of the output from these detectors is too slow, and hence the faster X-ray films cannot be used. The present invention is a very fast X-ray detector having high sensitivity to radiation which may be used with fast X-ray film to permit radiographic analysis at low radiation dosages and levels.

Ionization chamber detectors are bulky and require a high voltage source for operation. They are also very sensitive to temperature and barometric pressure and require

0026663

daily calibration checks. It is clear that an ionization chamber X-ray detector is appropriate only for a permanent installation. The present invention, however, is a battery-operated highly portable X-ray detector that is extremely stable and reliable.

Another disadvantage of the ionization chamber detector is that in operation it is positioned between the patient and the X-ray film, resulting in the image of the detector itself appearing on the radiograph. The X-ray detector of the present invention is compact and sensitive enough to fit within the X-ray film cassette holder behind the film and does not interfere with the exposure of the radiograph.

Both the photoelectric and ionization detectors are basically point detectors. If located behind a bone, for example, they give false readings.

The prior art fails to disclose a radiation detector similar to the present invention. U. S. Patent 3,450,879, issued to Seppi, illustrates a charged particle detector that determines the electrical conduction through a dielectric as a function of the impinging charged particle beam energy. The invention disclosed in Seppi, however, is fundamentally an ionization chamber detector with the air of the chamber replaced with a dielectric and is subject to the above difficulties. The remaining prior art discloses other radiation detectors that operate in different ways from the present invention and are therefore not believed relevant.

OBJECTS OF THE INVENTION


It is therefore a principal object of the present invention to provide an X-ray detector having a very fast response time.

It is another object of the present invention to provide an X-ray detector that is reliable and stable enough to maintain calibration when used in a portable manner.

It is yet another object of the present invention to provide an X-ray detector that is compact and battery powered.

It is still another object of the present invention to provide an X-ray detector having large field sensing capabilities.

Another object of the invention is to provide an X-ray detector that may be placed behind the film.

A further object of the invention is to provide an X-ray detector having a wide field of view.

Yet another object of the invention is to provide an X-ray detector whose sensitivity may be conveniently preset.

Still another object of the invention is to provide an X-ray detector free of atmospheric effects, stable, easy to manufacture and use.

Other objects of the invention will in part be obvious and will in part appear hereinafter.

The invention accordingly comprises the features of construction, combination of elements, and arrangement of parts which will be exemplified in the construction hereinafter set forth, and the scope of the invention will be indicated in the claims.

BRIEF DESCRIPTION OF THE DRAWINGS

FIGURE 1 is a perspective view of a radiation exposure apparatus in operation, illustrating the radiation detector of the present invention.

FIGURE 2 is a perspective view of the radiation detector of the present invention, with the film cassette shown in phantom.

FIGURE 3 is a front elevational view of the radiation detector shown in FIGURE 2, with the film cassette removed.

FIGURE 4 is a cross-sectional view taken along the line 4-4 of FIGURE 3.

FIGURE 5 is a top view of the conducting comb of the radiation detector of FIGURE 2.

FIGURE 6 is a partial cross-sectional view taken along the line 6-6 of FIGURE 3.

FIGURE 7 is a schematic view of another shape of conducting comb according to the invention.

FIGURE 8 is a block diagram of a circuit used with the radiation detector shown in FIGURE 2.

FIGURE 9 is a detailed schematic design of the radiation detector circuit of the invention.

Best Mode For Carrying Out The Invention

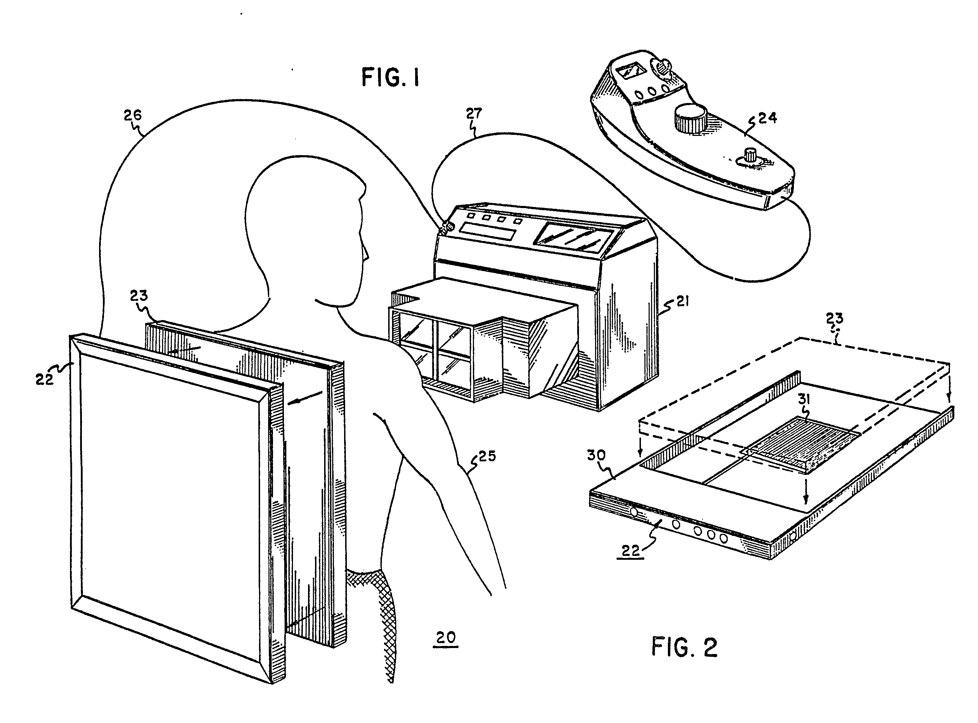

Referring to FIGURE 1, there is shown a radiation exposure system 20 comprising a radiation source 21, a radiation detector 22, a film cassette 23 and control means 24. The radiation exposure system 20 is designed as an X-ray system but other forms of ionizing radiation used for diagnostic purposes would be equally appropriate. A patient 25 is positioned between the X-ray source 21 and the detector-film combination 22 and 23. The X-ray source 21 is electrically connected to the radiation detector 22 by means of cable 26 and electrically connected to control means 24 by means of cable 27.

The detector 22 is responsive to impinging radiation from the X-ray source 21 and signals the X-ray source 21 through cable 26 when a preset radiation dosage is reached. Control means 24 can be used to turn the X-ray source 21 on and off, set exposure times and dosages and select between automatic and manual exposure. The entire radiation exposure system 20 is designed to be portable and does not require a permanent installation site. The radiation exposure system 20 can also be used with different patient orientation and does not require the patient to stand as shown in FIGURE 1. The patient can be lying down or immobilized in some other position while still allowing full operating capabilities of the radiation exposure system 20.

The X-ray source 21 and control 24 are preferably the type manufactured by General X-Ray Corporation of Southport, Connecticut, Models 101, 111 and 510. This apparatus is disclosed in U. S. Patent Application Serial Number 817,788 of July 21, 1977, for Portable X-ray Unit now issued as United States Patent No. 4,170,735, of October 9, 1979 assigned to the assignee of this application.

FIGURE 2 illustrates the radiation detector 22 with the film cassette 23 shown in phantom. As can be seen in FIGURE 2, an interior portion of the X-ray detector 22 is recessed to accept and receive the film cassette 23 to form an integral film-detector package. The detector 22 comprises a base or housing 30, a detector comb 31 and electonic circuitry which is not shown. The electronic circuitry is located within the base or housing 30 in the area of the base or housing which is not recessed.

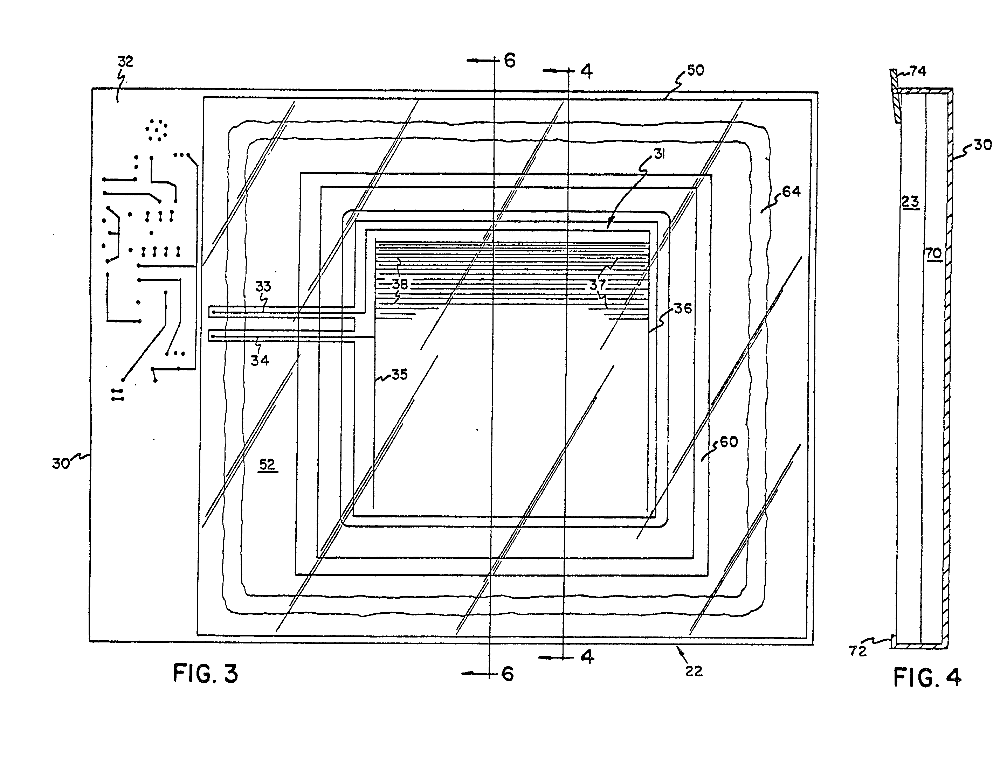

Referring to FIGURE 3, there is shown a detailed view of the detector 22. Printed circuit board 32 which receives the electrical and electronic components which comprise the electrical circuitry of the detector is disposed at one end of the housing 30 of the detector 22. The detector comb 31 is located approximately in the center of the recessed portion of the housing 30 and for chest X-rays covers an area roughly seven inches square. The detector comb 31 comprises conductors 33 and 34 which incorporate long conductor strips 35 and 36 which extend along two opposite sides of the detector comb 31. They are printed on a printed circuit board 50. A plurality of elongated conductor fingers 37 and 38, extend outward from the conductor strips 35 and 36 toward the opposite side of the conductor comb 31. The elongated conductor fingers 37 and 38 are positioned to be parallel to one another and located so that conductor fingers 37 extending from conductors 35 are alternately interleaved with conductor fingers 38 extending from conductor strip 36. The conductor fingers 37 extending from conductor strip 35 are positioned close to the conductor fingers 38 extending from conductor strip 36 but it is extremely important that the conductor fingers are electrically insulated from one another. The conductors 33 and 34 are preferably formed of tin plated copper.

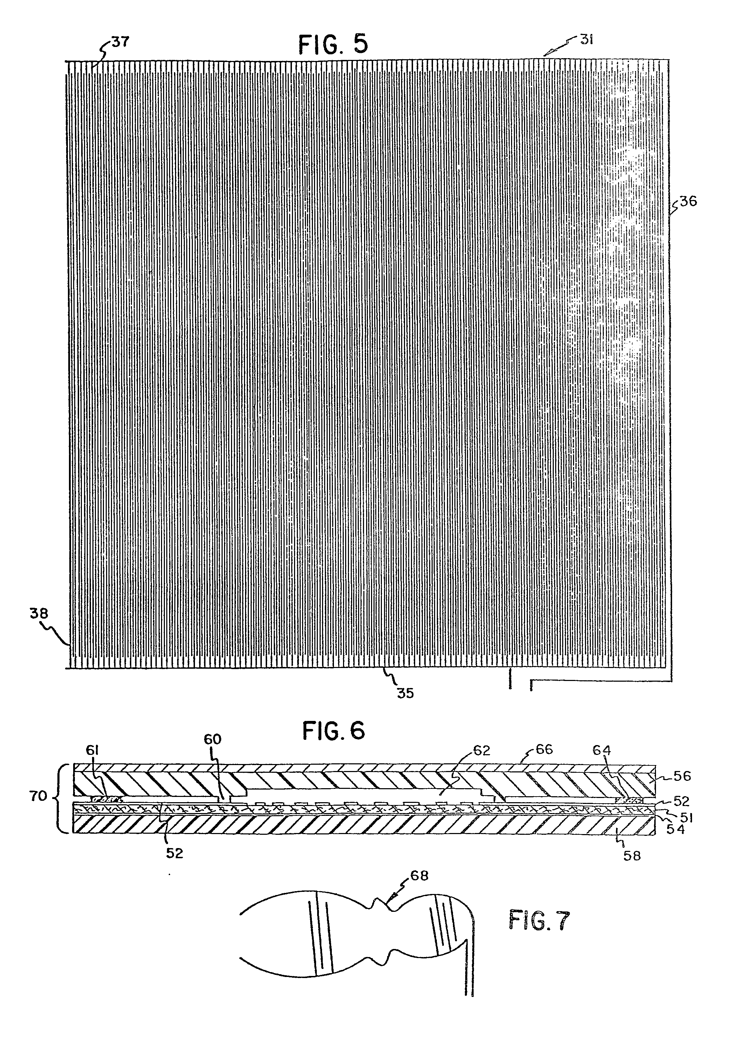

The detector comb 31 is a printed circuit printed on a non-conducting non-hydroscopic material such as epoxy glass printed circuit board 51. Referring to FIGURES 3 and 6, the detector comb 31 is surrounded by a printed circuit sheet conductor 52. The back of the board is fully covered by another printed circuit sheet conductor 54. The sheets 52 and 54 are connected together by plated through holes (not shown).

Specifically referring to FIGURE 6, polycarbonate covers 56 and 58 are provided. Cover 56 is provided with a raised rectangular boss 60 cemented to circuit board 51 to hermetically seal the recessed space 62 about detector comb 31. Space 62 is filled with a water free gas such as air. Cover 56 is also cemented circumferentially to circuit board 51 at cemented area 64. Cover 58 is also cemented to the other side of circuit board 51.

A metal plate 66, which may be of aluminum, is affixed to cover 56 by any convenient means.

In use plate conductors 52 and 54 and plate 66 are all connected together and to signal ground to protect the detector combs from spurious audio and radio frequency interference.

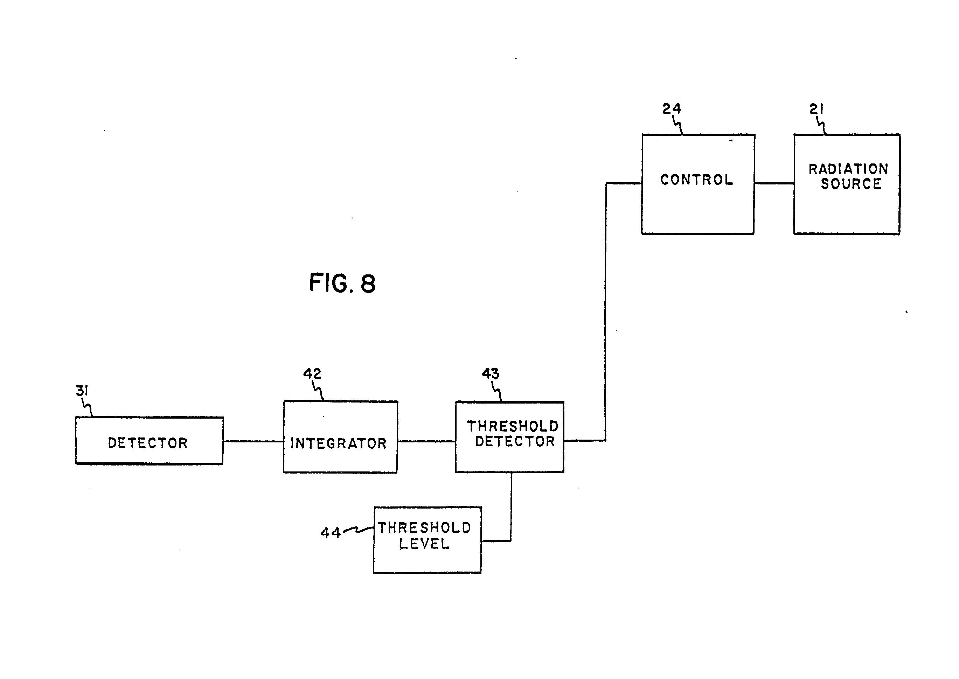

The comb may take many shapes in accordance with the type of X-ray to be taken. It should cover the area of the radiograph of interest. It may be shaped to conform to the radiographs of particular organs or as illustrated in FIGURE 7, the comb 68 may be shaped like the radiograph of neonates to be X-rayed.

The comb illustrated in FIGURE 5 comprises a pair of interlaced rectangular formed combs. The interlaced conductors are fifteen thousandths of an inch wide and separated by fifteen thousandths of an inch. The interlaced conductors need not be straight but merely closely spaced.

The housing 30 may be of any strong material such as sheet metal. The detector assembly 70 of FIGURE 6 is affixed in the back away from the source of X-rays with cover 58 against the housing 30. Cassette 23 is removably held in housing 30 by bottom lip 72 and a spring loaded clip 74.

FIGURE 8 is a block diagram of the major component parts of the radiation exposure system 20 including the major components of the electronic circuit incorporated into the detector 22. It can be seen from FIGURE 5 that in addition to the detector 31, the control 24 and the X-ray source 21, the radiation exposure system 20 also comprises an integrator 42, a threshold detector 43 and a threshold selection and adjustment circuit 44. The output from the detector zone 31 is applied to the input of the integrator 42. The output from the integrator 42 and the threshold selection circuit 44 is applied to the input of the threshold detector 43. The output from the threshold detector 43 is applied to one input of the control 24. The output of the control 24 is connected to the input of the X-ray source 21. The integrator 42, threshold detector 43 and threshold selection circuit 44 comprises the electronic circuitry that is incorporated into the detector 22.

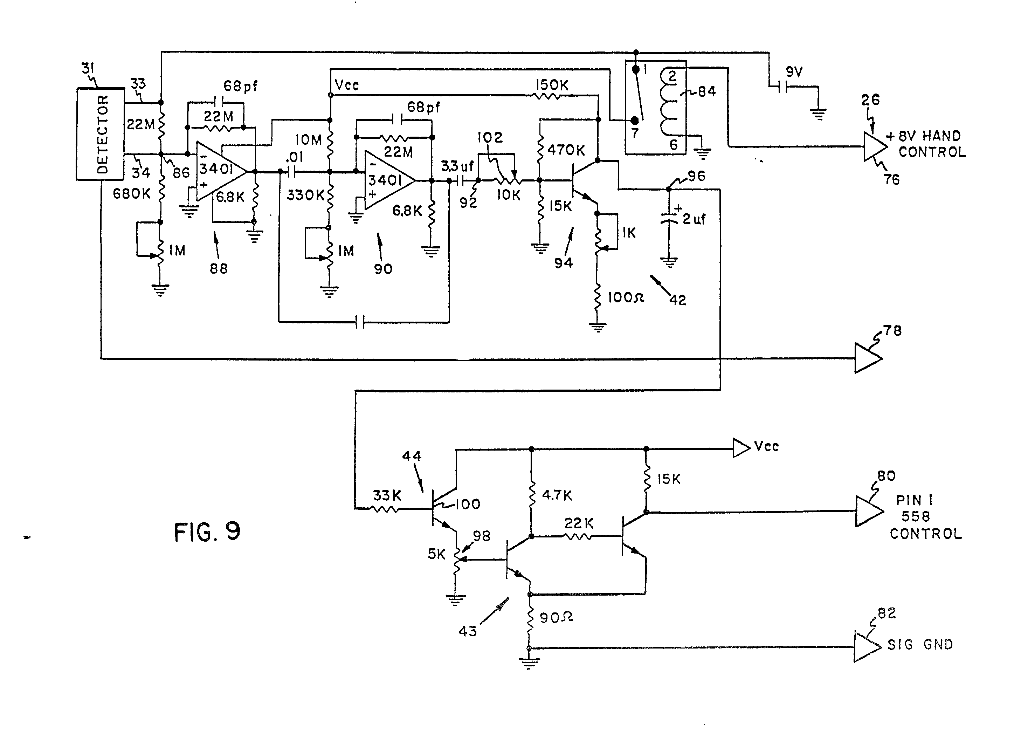

Now referring to FIGURE 9 where the detector circuit is illustrated in detail. The detector circuit is connected to the X-ray source 21 and thus to the hand-held controller 24 illustrated in FIGURE 1, via cable 26, comprising terminals or pins 76, 78, 80 and 82. Pin 82 is a signal ground and pin 78 is earth or chassis ground connected from the X-ray unit 21 to the third wire of the 120 volt utility outlet, for example. Pin 76 receives from the hand controller an ON signal when the reset button of the hand controller is operated. This activates reed relay 84 connecting a 9 volt supply to activate the detector circuitry. The 9 volt supply may conveniently be three 9 volt transistor radio batteries.

When the detector 31 receives X-rays, the resistance between wires 33 and 34 connected between the detector combs 31 decreases providing a signal at terminal 86. This is amplified in first stage amplifier 88 and second stage amplifier 90, each of which are one quarter of a common 3401 integrated circuit. In the circuit the operational amplifiers of the 3401 are provided with common biasing and just enough negative feedback to stabilize them and provide some linearization of the signal. The amplified signal provided at the output of the two stage amplification at terminal 92 comprises an instantaneous amplitude which is directly proportional to the amplitude of X-rays being received by the detector. Response is in the order of microseconds. In the case of X-ray apparatus of General X-Ray Corporation as illustrated in FIGURE 1, this signal comprises a series of half-wave rectified AC signals.

These signals are provided to transistor amplifier 94, the transistor of which is one of the transistors of a CA3046 integrated circuit supplied by RCA. Integration of the signal at terminal 92 occurs at terminal 96 because of the action of the two microfarad capacitors connected between terminal 96 and ground. When the circuit is turned off, that is no X-rays are being received, the two microfarad capacitor is charged through a a 150 kilohm resistor connected to it and the battery supply Vcc. When transistor 94 conducts in response to the signal supplied by the amplification stages 88 and 90, the capacitor is discharged producing a negative ramp function.

The negative ramp function which is the integral of the instantaneous X-ray signal being received at detector 31 is provided to the threshold detector generally indicated at 43. The threshold level is set by the value of resistor 98 and this preferably takes the form of a plurality of potentiometers, each of which may be switched into the circuit by the user to select a particular combination of fluorescent screen and film type. Adjustment of the potentiometer is only done by the factory or by a repair technician. Thus a plurality of values for resistor 98 may be selected by the user to correspond to the cassette and film that the user is using. This selects the level of the declining ramp signal at which the detector, which is a Schmidt trigger, fires and produces output signal at 80 which is utilized at the control 24 in FIGURE 1 to turn off the X-ray timer and thus conclude the X-ray. The detector 43 comprises three transistors, each of which are one transistor of a single CA3046 utilized in the circuit. Those skilled in the art will see that the threshold level setting circuit 44 thus comprises transistors 100 and potentiometer 98.

Potentiometer 102 is user adjusted. It provides some gain control so that the darkness or lightness of the radiograph may be selected to suit the user's preference.

It will thus be seen that the objects set forth above among those made apparent from the preceding description, are effeciently attained and, since certian changes may be made in the above instruction without departing from the scope of the invention it is intended that all matter contained in the above description or shown in the accompanying drawings shall be interpreted as illustrative and not in a limiting sense.

It is also to be understood that the following claims are intended to cover all of the generic and specific features of the invention herein described and all statements of the scope of the invention, which as a matter of language might be said to fall therebetween.

Having described our invention what we claim as new and desire to secure by Letters Patent is:

0026663

1. An X-ray detector comprising:

   A) an amorphous non-photoconductive, electrical insulator providing a first surface; and

   B) a pair of electrical conducting comb like patterns on

   said surface the tine portions thereof interlaced but not connected together, the said detector patterns preferably substantially conforming to the area of a body part to be X-rayed.

2. The X-ray detector defined in claim 1 and:

   C) circuit means connected to said detector patterns for integrating the change of resistance between said patterns when they are subjected to X-rays.

3. An X-ray detector according to claim 2, said circuit means further comprising means for detecting when the integral of the change in resistance reaches a preset level to provide an interrupt signal.

4. An x-ray detector according to claim 3, and further comprising

   D) an X-ray controller responsive to said interrupt signal to discontinue a radiograph.

5. An x-ray detector according to claim 1 or 2 wherein said insulator is made of a material that is impervious to water e.g.

**0026663**

a glass epoxy material and further comprising e.g.

    D) means for hermetically sealing the detector with a water free gas in contact with said surface.

6.   An X-ray detector according to claim 1 or 2 and further comprising

    C) a pair of sheet conductors, one on each side of said insulator, said conductors connected together.

7.   An X-ray detector according to claim 6 and further comprising

    D) a sheet conductor on said surface surrounding said comblike patterns and connected to said pair of sheet conductors.

8.   An X-ray detector according to claim 7 and further comprising

    E) circuit means having a signal ground and connected to said detector patterns for integrating the change of resistance between said patterns when they are subjected to X-rays; and

    F) said pair of sheet conductors and said sheet conductor on said surface connected to said signal ground.

9.   An X-ray detector according to claim 3 and further comprising

    D) means allowing the user to select one of a plurality of preset levels corresponding to preselected combinations of fluorescent screen and X-ray film.

10. An X-ray detector according to claim 9 and further comprising

E) means for allowing the user to slightly vary the response of said integrating circuit means to said change of resistance.

FIG. I

26

27

24

23

22

21

25

20

23

31

30

22

FIG. 2

1 / 5

0026663

FIG. 3

FIG. 4

FIG. 5

FIG. 6

FIG. 7

FIG. 8

RADIATION SOURCE 21

CONTROL 24

DETECTOR 31

INTEGRATOR 42

THRESHOLD DETECTOR 43

THRESHOLD LEVEL 44

FIG. 9

5/5

0026663